# EUROPEAN PATENT APPLICATION

(11) **EP 1 777 649 A1**
(43) Date of publication of application: **25.04.2007**
(21) Application number: 05023130.7
(22) Date of filing: 24.10.2005
(51) Int. Cl.: G06Q 10/00

(54) **Production planning using product characteristics**

(71) Applicant: SAP AG, 69190 Walldorf (DE)
(72) Inventor: Biegler, Hans-Jürgen, 68723 Schwetzingen (DE); Fuhlbrügge, Christian, 69251 Gaiberg (DE); Hartel, Michael, 69115 Heidelberg (DE); Karbach, Doris, 69231 Rauenberg (DE); Anselmann, Peter, 69181 Leimen (DE); Worbs, Sabine, 76646 Bruchsal (DE); Kulick, Thorsten, 64625 Bensheim-Schönberg (DE); Embacher, Christian, 69231 Rauenberg (DE); Suvernev, Andrei, Palo Alto California 94303 (US)
(74) Representative: Walter, Philipe

(57) **Abstract**

Production planning with defining setup states of resources, assigning setup states to corresponding operations on the resource, and determining sequence dependent setup times of resources from the setup state transitions from a setup matrix. To allow automatic setup dependent planning the setup matrix is derived automatically from product characteristic matrices.

## Description

### FIELD OF THE INVENTION

The present application relates to in general to production planning processes.

### BACKGROUND

In production processes, resource utilization is planned within a planning unit. Processes are planned to be run on resources. During execution, the processes are executed on the resources as planned. Running a process may comprise the steps: setup of the resource, production on the resource, and possibly tear down of the resource. After one process is run on a resource, the next process can be planned. For a next process, it may be possible that a different product is produced on the resource. The setup of the resource needs to be changed in order to produce the new product. This change may be understood as setup transition.

A process can be understood as an activity or operation on a resource. A resource can be understood as a machine, a utility, a production plant, a transportation unit, or any other means suitable for working, producing, transporting, or packing a material, assembly, or product.

If a process is executed on a machine, the duration of the production step is determined by the machine itself, i.e. the duration of the production section on the machine is related to the rate of the machine.

However, the setup time for setting up a resource often may not only be determined by the resource itself, but also by predecessor processes running on the resource and the product characteristics used on the resource for the present process. In other words, the setup transition may define the setup time. The scheduling of processes takes into account the information about predecessor processes and product characteristics when executing the process planning. Product characteristics may be understood as any possible characteristic describing a product. This may, for example be, a type of material, a type of raw material, a colour, a format, a voltage class, a destination of the product, a size of the product, or any other possible characteristic suitable to describe a product.

Sequence dependent setup planning may be understood as planning the setup times of a process depending on setup transitions. In order to use a sequence dependent setup planning in production planning, it is necessary to define the setup states on the resources after processing a product on the resources and to define all possible setup transitions of the existing setup states. Setup states may be understood as possible combinations of characteristic values of characteristics of a product.

The drawback of current systems is that for sequence dependent setup planning setup transitions and corresponding setup times and/or costs need to be maintained manually. All setup transitions and their setup times need to be kept up-to-date manually, resulting in a huge amount of manual work.

Therefore, it is an object of the application to support the user in the maintenance of the setup master data. It is another object of the application to simplify the handling of sequence dependent setup planning on resources.

### SUMMARY

The application provides, according to one aspect, a method for production planning with defining setup states of resources, assigning setup states to corresponding operations on the resource, and determining sequence dependent setup times of resources from the setup state transitions from a setup matrix, wherein the setup matrix is derived automatically from product characteristic matrices.

It has been found that it is possible to derive setup matrices from product characteristics. It has further been found, that in many cases of production planning, the setup state of a resource may be determined from product characteristics that are processed on the resource. The setup state of a resource may be derived from characteristic values of the product.

If, for example, the setup state was dependent on the product characteristics format and destination country, then the setup state would be a function of characteristic values of these two characteristics. The combination of all characteristic values will give the number of all possible setup states. The setup time for a state transition may be determined from the setup times for state transitions of each of the characteristics independently. For a change between characteristic values of a first characteristic, a corresponding setup time and/or setup cost may be defined. The same may be done for any other characteristic. Combining the independent setup times for each of the characteristics into the setup matrix has been found to be useful.

The setup matrix can be described as a function of the characteristic matrices. With the usage of characteristic matrices it is possible to derive the setup matrix for the setup states from the characteristic matrices automatically.

Another aspect of the application is a computer program product tangibly embodied in an information carrier, and a computer program product including instructions that, when executed, result in at least the following defining setup states of resources, assigning setup states to corresponding operations on the resource, and determining sequence dependent setup times of resources from the setup state transitions from a setup matrix, wherein the setup matrix is derived automatically from product characteristic matrices.

A further aspect of the application is a system arranged for production planning comprising a maintenance unit arranged for defining setup states of resources, assigning setup states to corresponding operations on the resource, and a planning unit arranged for determining sequence dependent setup times of resources from the setup state transitions from a setup matrix, wherein the planning unit is further arranged for deriving the setup matrix automatically from product characteristic matrices.

Referring now to the drawings, aspects of the present application and operating environment will be described.

### BRIEF DESCRIPTION OF THE DRAWINGS

In the figures:
- FIG. 1: illustrates a production planning environment according to embodiments;
- FIG. 2: illustrates a flowchart of a method according to embodiments;
- FIG. 3: illustrates a flowchart of a production process processing different orders;
- FIG. 4 A,B: illustrate characteristic matrices according to embodiments;
- FIG. 5: illustrates a setup matrix derived from characteristic matrices illustrates in FIG. 2.

### DETAILED DESCRIPTION

In known production planning systems the maintenance of the setup master data is difficult, error prone and very time consuming. The most critical issues are the maintenance of setup matrices and the assignment of setup states to orders of an order plan. The maintenance of setup matrices is critical, because setup matrices could be very large. If N setup states are possible for a process, then the setup matrix consists of N*N setup transitions. The assignment of setup states to order planning may also be critical, because at least for each product a corresponding production plan exists.

According to the applications, it is only necessary to maintain characteristic matrices, rules for generating setup states - the setup states can also be called setup groups - and rules for generating setup matrices.

One advantage of maintaining setup states and setup matrices automatically, according to embodiments, may be presented easily by an example. For example, the setup state could be described by 3 characteristics and each of the characteristics consists of 5 characteristic values. This would result in 5³ = 125 setup states. The corresponding setup matrix would consist of (5³)² = 125² = 15.625 setup transitions.

When deriving the setup states and setup matrices automatically from the characteristics and characteristic matrices using rules, it is only necessary to maintain for each one of three product characteristics five characteristic values. Thus, in order to create three characteristic matrices each with five characteristic values result in 75 state transitions for the characteristics, which have to be maintained.

Only additional rules for generating setup states and setup matrices would have to be maintained.

According to the application, for deriving automatically setup states from product characteristics and setup matrices from characteristic matrices, the rules and 75 setup transitions have to be maintained. Automatic derivation of the setup states and setup matrices may be done by the system. This helps to reduce the maintenance effort tremendously.

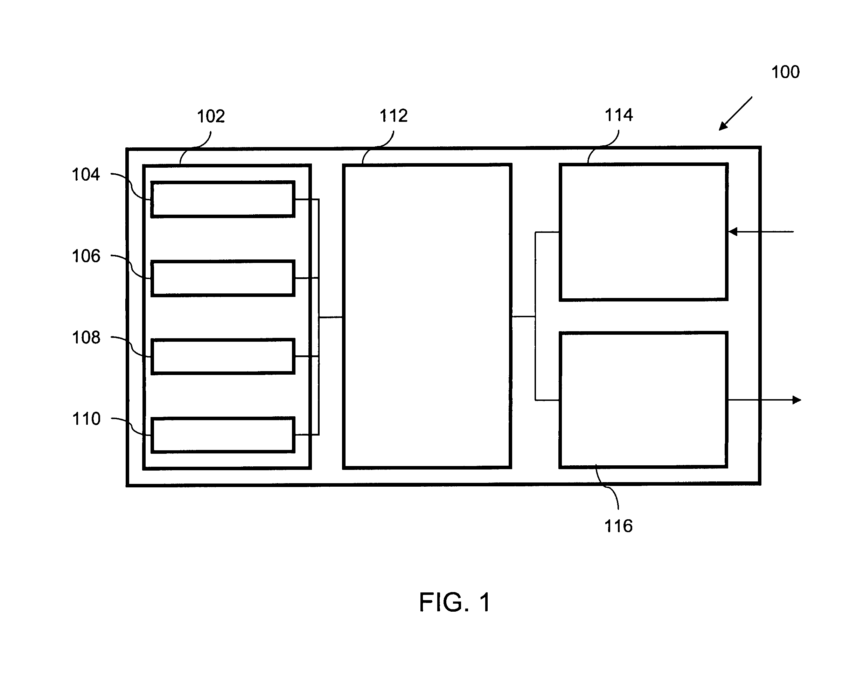

FIG. 1 illustrates a system 100 arranged for carrying out a method according to embodiments. Illustrated is a maintenance unit 102 comprising: a user interface 104, a storage unit for characteristic matrices 106, a storage unit for rules for generating setup states 108, and a storage unit for rules for generating setup matrices 110.

The maintenance unit is connected with a planning unit 112, in which processing of orders is planned. The planning unit has an input interface 114 for receiving product orders and an output interface 116 for outputting a planned production order for execution.

The system may be operated by a computer program executed within the maintenance unit 102 and the planning unit 112. When executed, the computer program may result in a method as described below.

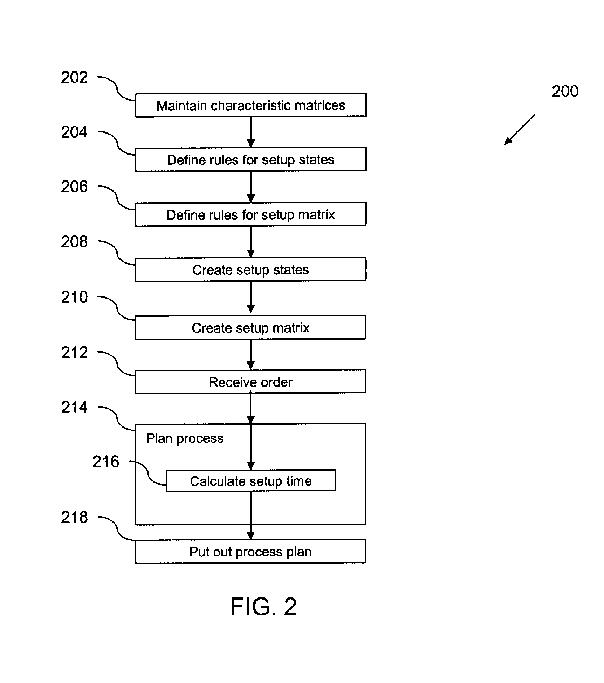

The operation of the system 100 as illustrated in FIG. 1 is further described in conjunction with FIG. 2.

FIG. 2 illustrates a flowchart of a production planning method 200 according to embodiments.

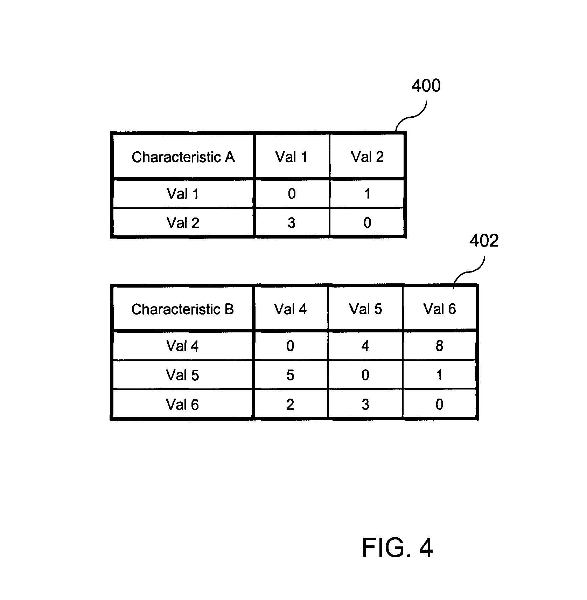

Using user interface 104, users can maintain characteristic matrices (202). The product characteristic matrices comprise setup information for setup transition between characteristic values of the respective characteristic. The user can input through user interface 104 the setup information for each possible state transition of the product characteristic. Characteristic matrices are illustrated in more detail in FIG. 4A, B

FIG. 4A illustrates a characteristic matrix 400 for a product characteristic A. This characteristic may be a material type of the product, for example. Characteristic A may be described by at least two characteristic values Val 1, Val 2. A transition from Val 1 to Val 2, may, for example, result in a setup transition time of 1. A change from Val 2 to Val 1 may result in a setup transition time of 3.

FIG. 4B illustrates a characteristic matrix 402 for a product characteristic B. Characteristic B may be described by at least three characteristic values Val 4, Val 5, and Val 6. A transition from Val 4 to Val 6, may, for example, result in a setup transition time of 8. A change from Val 6 to Val 5 may result in a setup transition time of 3. Further transition times may be derived from characteristic matrix 402.

It is to be understood that the illustrated setup times are exemplary only. It is further noted that within the characteristic matrices 400, 402, further setup information may be stored for a product characteristic. Further, it is to be understood that product characteristics may be any characteristics of a product suitable for defining setup states of a resource and for calculating setup times.

The characteristic matrices are stored in storage unit 106.

After having maintained (202) the characteristic matrices 400, 402, rules for generating setup states may be defined (204). The rules may define which characteristics are used for setup states. Further, the names of the setup states can be defined within the rules.

It may also be possible, for example, that certain resource is not capable of processing a red resin after a blue resin, a state transition of the characteristic resin from blue to red may be excluded within the rules. The rules for generating setup states may take into account the interoperation of different materials on a resource and may consider compatibility of different materials with different characteristics. The rules may be stored in storage unit 108.

After having defined the rules for generating setup states (204), rules for generation a setup matrix are defined (206). These rules define how to combine setup information from characteristic matrices 400, 402 for setup state transitions into at least corresponding setup times in the setup matrix.

These rules may, for example, define that a setup time for a product with two materials depends on the overall setup times of all setup transitions of both materials. Then, the setup times from the matrices 400, 402 may be summed. It may also possible to use only the maximum value of one of the matrices 400, 402. Other rules are possible as well.

The rules for generation a setup matrix are stored in storage unit 110.

Using the rules for generating setup states, the setup states are created in setup (208). In addition, the rules for generating the setup matrix are used to generate the setup matrix from the characteristic matrices 400, 402 and the generated setup states in a further step (210).

To find out the setup times for state transitions of setup states of processing a product, possible setup transitions of the setup states need to be known together with their setup times and setup costs.

This is done using the setup matrix. The setup matrix may contain the duration and the cost for all setup transitions of the setup states. The setup matrices may be assigned to the resources in case sequence dependent setup planning is used. With this assignment it is possible to determine dynamically the setup times and the setup costs (216) by the position of the operations on the resource.

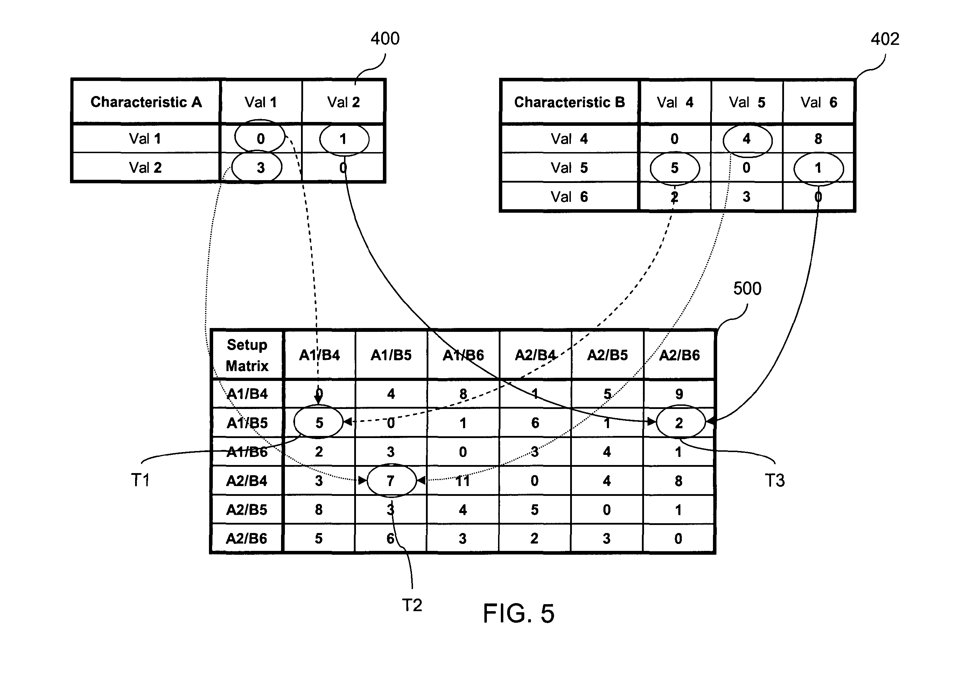

Illustrated in FIG. 5 is a setup matrix 500 derived from the characteristic matrices 400, 402.

The setup matrix can be derived from the characteristic matrices 400, 402, using rules for generating the setup matrix 500. For example, it may be defined in the rules that the setup times from each of the characteristic matrices 400, 402 are to be summed. This may result, for example, for state transition (T1) for a product with value Val 1 of characteristic A (A1), and value Val 5 of characteristic B (B5) to a product with value Val 1 of characteristic A (A1), and value Val 4 of characteristic B (B4). This state transition (T1) may result in a setup time of 5. This can be derived from the sum of the setup time for transitions B5-B4 in matrix 402 and A1-A1 in matrix 400.

Having received (212) the order, planning unit 112 may plan (214) a processing sequence of operations on a resource. The order may define which product is required with which product characteristics.

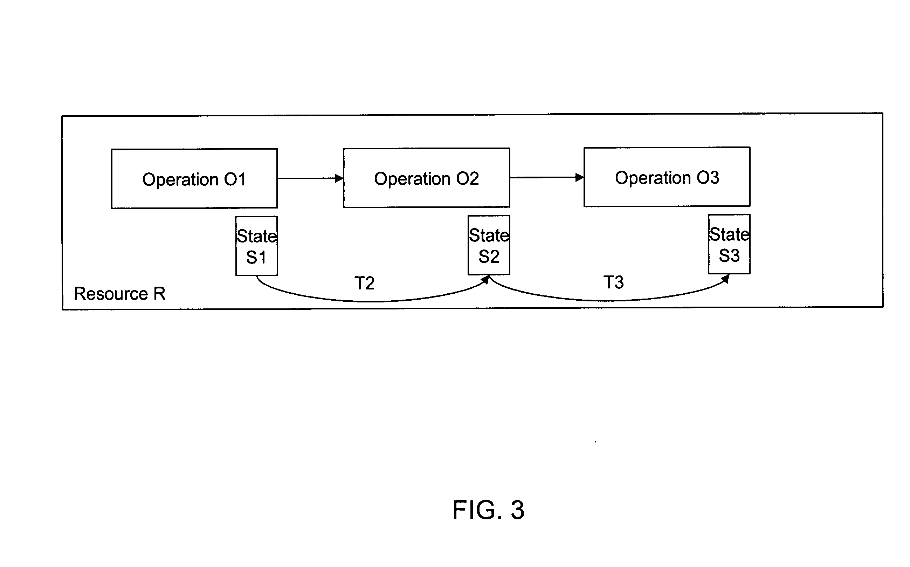

As illustrated in FIG. 3 on a resource R, operations O1-O3 may be planned in order to complete three orders for products. Each operation O1-O3 results in a setup state S1-S3 of resource R. The setup states S1-S3 depend on the characteristic values of products processed on the resource for the corresponding order.

Setup states S1-S3 represent the resource state after processing an operation O1-O3 for a certain product on the resource R. If an order is created with a specific setup state for an operation, then the processing of this operation converts the resource R in a new setup state.

In order to derive the setup states and the setup times automatically, embodiments provide the planning unit 102 to use derive the calculated setup states S1-S3. The setup states S1-S3 represent combinations of characteristic values of the products processed on the resource R. The planning unit 102 may assign setup states S1-S3 to corresponding operations O1-O3 on the resource R, such that combinations of characteristic values of the products processed on the resource R represent a state of the resource R after the operation on the resource R. Between operations O1-O3 on the resource, a transition of between setup states S1-S3 may be represented by a change of at least one characteristic value of a characteristic of the product. However, a transition may also occur without a change of characteristics. A change from setup state S1 to setup state S2 is illustrated as transition T1, and a change from setup state S2 to setup state S3 as transition T2.

In order to allow calculating setup times (216) for resource R for processing an order, the calculated setup matrix 500 is obtained.

With the setup states of the resource R and the corresponding state transitions, it is possible to derive the setup times from the setup matrix 500.

For example, an order consists of operations O1-O3. In this case, after order O1, the resource has a setup state S1 represented by value Val 2 of characteristic A (A2) and of value Val 4 of characteristic B (B4). A setup state S2 may be represented by value 1 of characteristic A (A1) and value 5 of characteristic B (B5). A state transition (T2) between setup state S1 and S2 results in a corresponding setup time. This setup time may be derived from setup matrix 500 in the field A2/B4-A1/B5. The corresponding value was previously derived automatically from the sum of the setup time of 4 for transition B3-B5 in matrix 402 and 3 for transition A2-A1 in matrix 400 using the rules for generating the setup matrix.

A state transition T3 can be a state transition between state S2 (A1/B5) and state S3 (A2/B6). This transition would result in a setup time of 2.

It is possible, that product characteristics are fixed, i.e. it is only possible to order one of a plurality of products with defined characteristics. In this case the characteristic values may be assigned to the product data directly. Each different product possesses a different combination of characteristics. If an order is created for the product, then the characteristic values could be taken directly from the product.

However, it is also possible to provide products with variable characteristics, i.e. a customer may select certain characteristics of a product within his order. In such orders the product is configurable with different characteristics. Because there may be a plurality of possible combinations of the characteristic values, the characteristic are assigned to the order. The characteristic values are first selected, if a customer orders a specific product variant, i.e. a product with specific characteristic values. If an order is created to supply the customer order, then the characteristic values of the customer order are taken from the order to derive the setup state.

The planned production order is output on output (218) interface 116 for execution.

The difference to known methods is that the maintenance of setup states and setup matrices is done by the system in a generation step. The prerequisite for deriving setup states and setup matrices is the usage of characteristic matrices. With the characteristic matrices it is possible to define the setup matrices for characteristic values, the rules for generating setup states and rules for generating setup matrices. After these steps it is possible to derive automatically the setup states and setup matrices and to calculate setup times automatically and dynamically.

## Claims

1. A method for production planning with
- defining setup states of resources,
- assigning setup states to corresponding operations on the resource, and
- determining sequence dependent setup times of resources from the setup state transitions from a setup matrix,
wherein
- the setup matrix is derived automatically from product characteristic matrices.

2. The method of claim 1, wherein the product characteristic matrices comprise setup information for setup transition between characteristic values of the characteristic.

3. The method of one of the previous claims, wherein the setup states depend on the characteristic values of products processed on the resource.

4. The method of one of the previous claims, wherein the setup states represent combinations of characteristic values of the products processed on the resource.

5. The method of one of the previous claims, wherein combinations of characteristic values of the products processed on the resource represent a state of the resource after an operation on the resource.

6. The method of one of the previous claims, wherein a transition of a setup state is represented by a change of at least one characteristic value of a characteristic of the material.

7. The method of one of the previous claims, wherein the setup matrix comprises setup transitions of setup states and at least one of
A) corresponding setup times;
B) corresponding setup costs.

8. The method of one of the previous claims, further comprising deriving setup states from rules for generating setup states.

9. The method of one of the previous claims, further comprising generating the setup matrix from rules for generating setup matrices.

10. The method of one of the previous claims, wherein the rules for generation the setup matrix define, how to combine setup information for setup transition between characteristic values of the characteristic into at least corresponding setup times in the setup matrix.

11. The method of one of the previous claims, further comprising assigning product characteristics values to a product such that each product comprises a different combination of characteristics values of its characteristics.

12. The method of one of the previous claims, further comprising deriving the characteristic values from the product.

13. The method of one of the previous claims, further comprising assigning product characteristics values to a customer order such that a customer order defines combination of characteristics values.

14. The method of one of the previous claims, further comprising deriving the characteristic values from the customer order.

15. A computer program product tangibly embodied in an information carrier, the computer program product including instructions that, when executed, result in at least the following:
- defining setup states of resources,
- assigning setup states to corresponding operations on the resource, and
- determining sequence dependent setup times of resources from the setup state transitions from a setup matrix,
wherein
- the setup matrix is derived automatically from product characteristic matrices.

16. A computer program including instructions that, when executed, result in at least the following:
- defining setup states of resources,
- assigning setup states to corresponding operations on the resource, and
- determining sequence dependent setup times of resources from the setup state transitions from a setup matrix,
wherein
- the setup matrix is derived automatically from product characteristic matrices.

17. A system arranged for production planning comprising
- a maintenance unit arranged for defining setup states of resources, assigning setup states to corresponding operations on the resource, and
- a planning unit arranged for determining sequence dependent setup times of resources from the setup state transitions from a setup matrix,
wherein
- the planning unit is further arranged for deriving the setup matrix automatically from product characteristic matrices.
